# EUROPÄISCHE PATENTANMELDUNG

(11) **EP 2 605 372 A2**
(43) Veröffentlichungstag der Anmeldung: **19.06.2013**
(21) Anmeldenummer: 12195319.4
(22) Anmeldetag: 03.12.2012
(51) Int. Cl.: H02K 1/27, H02K 1/28

(54) **Halteelement für Permanentmagnete an einem Rotor einer elektrischen Maschine**

(30) Priorität: 13.12.2011 DE 102011088362
(71) Anmelder: ROBERT BOSCH GMBH, 70442 Stuttgart (DE)
(72) Erfinder: Meyer, Christian, 76228 Karlsruhe-Wolfartsweier (DE); Gmuend, Torsten, 76437 Rastatt -Pliitersdorf (DE)

(57) **Zusammenfassung**

Die Erfindung betrifft ein Halteelement (6) für einen Rotor (1) einer elektrischen Maschine, umfassend:
- einen ersten Abschnitt (61), der im Wesentlichen eine Kreiskontur aufweist;
- einen sich an eine Umfangslinie der Kreiskontur des Halteelements (6) anschließenden zylindrischen zweiten Abschnitt (62), der sich senkrecht zur durch die Kreiskontur aufgespannten Fläche in einer axialen Richtung erstreckt;
- ein federelastisches Fixierelement (65, 66), das ausgebildet ist, um bei Aufschieben des Halteelements (6) auf einen Rotorkörper (2) das Halteelement (6) auf einer Rotorwelle (3) des Rotors (1) zu fixieren.

## Beschreibung

### Technisches Gebiet

Die vorliegende Erfindung betrifft Rotoren für elektrische Maschinen, insbesondere Maßnahmen zum Befestigen von Permanentmagneten an Rotorkörpern von derartigen Rotoren.

### Stand der Technik

Rotorkörper für heutzutage übliche Rotoren für elektrische Maschinen werden in der Regel durch Aufeinanderstapeln von Lamellenpaketen zusammengesetzt. Die Rotorkörper werden mit Permanentmagneten versehen, beispielsweise aus Fe, SmCo und NdFeB. Die Permanentmagnete werden in die Rotorkörper eingesetzt oder auf die Umfangsfläche des Rotorkörpers aufgesetzt.

Das Befestigen der Permanentmagnete auf den Rotorkörper kann durch Kleben der Permanentmagnete auf die Umfangsfläche oder, bei so genannten Speichenrotoren, durch Einschieben der Permanentmagnete in einen Schacht, in dem sie anschließend verklebt, verklemmt oder vergossen werden, vorgenommen werden.

Insbesondere im Speichenrotor werden magnetische Verluste beim Einbau des Permanentmagneten in den größeren Schacht in Kauf genommen, da in der Regel ein spielfreies Anliegen der Permanentmagnete nicht zuverlässig zu gewährleisten ist.

Außerdem sind die Permanentmagnete auf der Umfangsfläche des Rotors bisher nur durch Kleben oder Verrasten zu befestigen.

Bisher stellen die Befestigungsmethoden zum zuverlässigen Anbringen der Permanentmagnete an dem Rotor einen aufwändigen Verfahrensschritt dar und es ist daher wünschenswert, die Montage und den Aufbau eines Rotors für eine elektrische Maschine entsprechend zu vereinfachen. Weiterhin soll der Aufbau möglichst geringe magnetische Verluste aufweisen, so dass eine Verkleinerung des Rotors bei gleich bleibender Leistungsdichte erreicht werden kann.

### Offenbarung der Erfindung

Diese Aufgabe wird durch das Halteelement zum Fixieren von Permanentmagneten an einem Rotor gemäß Anspruch 1 sowie durch den Rotor und die elektrische Maschine gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Halteelement für einen Rotor einer elektrischen Maschine vorgesehen. Das Halteelement umfasst:
- einen ersten Abschnitt, der im Wesentlichen eine Kreiskontur aufweist;
- einen sich an eine Umfangslinie der Kreiskontur des Halteelements anschließenden zylindrischen zweiten Abschnitt, der sich senkrecht zur durch die Kreiskontur aufgespannten Fläche in einer axialen Richtung erstreckt;
- ein federelastisches Fixierelement, das ausgebildet ist, um bei Aufschieben des Halteelements auf einen Rotorkörper das Halteelement auf einer Rotorwelle eines Rotors zu fixieren.

Eine Idee des obigen Halteelements besteht darin, die Permanentmagnete an mindestens einem axialen Ende des Rotors an einer dem Rotorkörper gegenüberliegenden Oberfläche zu übergreifen und gegen den Rotorkörper zu drücken. Dadurch kann eine Fixierung der Permanentmagnete an dem mindestens einen Stirnende des Rotorkörpers gewährleistet und gleichzeitig sichergestellt werden, dass die Permanentmagnete spielfrei an der Oberfläche des Rotorkörpers aufliegen, so dass eine gute magnetische Kopplung des Permanentmagneten mit dem Rotorkörper erreicht wird.

Um ein Verschieben des Halteelements in axialer Richtung zu verhindern, sind Federzungen vorgesehen, die an einer Fläche der Rotorwelle oder an einer Fläche des Rotorkörpers anliegen und gegen eine vom Rotorkörper weg führende Bewegung verkanten.

Weiterhin kann das Fixierelement eine oder mehrere Federzungen aufweisen. Insbesondere können die Federzungen radial nach innen zu einer Durchlassöffnung ausgerichtet sein.

Gemäß einer Ausführungsform kann mindestens ein Eingreifelement vorgesehen sein, das achsparallel zu dem zylindrischen zweiten Abschnitt von dem ersten Abschnitt in Richtung des zweiten Abschnitts absteht, wobei das mindestens eine Eingreifelement eine Federzunge aufweist, die entgegen der Richtung des Abstehens des Eingreifelements von dem ersten Abschnitt ausgerichtet ist.

Weiterhin kann der zweite Abschnitt in achsparalleler Richtung einen oder mehrere Schlitze aufweisen.

Gemäß einem weiteren Aspekt ist ein Rotor für eine elektrische Maschine vorgesehen. Der Rotor umfasst:
- einen Rotorkörper;
- mindestens einen Permanentmagneten, der auf einer Oberfläche des Rotorkörpers angeordnet ist;
- ein Halteelement mit einem ersten Abschnitt, der im Wesentlichen eine Kreiskontur aufweist, und mit einem sich an eine Umfangslinie der Kreiskontur des Halteelements anschließenden zylindrischen zweiten Abschnitt, der sich senkrecht zur durch die Kreiskontur aufgespannten Fläche in einer axialen Richtung erstreckt;
   wobei der zweite Abschnitt an einer dem Rotorkörper gegenüberliegenden Oberfläche des mindestens einen Permanentmagneten federelastisch anliegt, um den mindestens einen Permanentmagneten an den Rotorkörper zu drücken.

Gemäß einer weiteren Ausführungsform kann der Rotorkörper an seiner Mantelfläche mindestens eine Ausnehmung aufweisen, um den mindestens einen Permanentmagneten aufzunehmen.

Weiterhin kann das Halteelement ein Fixierelement umfassen, um das Halteelement in axialer Richtung an dem Rotorkörper zu halten.

Gemäß einer Ausführungsform kann der Rotor eine Rotorwelle aufweisen, die koaxial zu dem Rotorkörper angeordnet ist, wobei das Fixierelement mindestens eine Federzunge umfasst, die radial nach innen zu einer Durchlassöffnung ausgerichtet ist, wobei das Halteelement auf die Rotorwelle aufgeschoben ist, so dass es an einer Stirnseite des Rotorkörpers anliegt und wobei die mindestens eine Federzunge durch Anliegen an der Rotorwelle in einer zu dem zweiten Abschnitt entgegengesetzten Richtung abgebogen ist und dadurch auf die Rotorwelle drückt.

Alternativ oder zusätzlich kann der Rotor eine Rotorwelle aufweisen, die koaxial zu dem Rotorkörper angeordnet ist, wobei der Rotorkörper mindestens eine achsparallele Öffnung aufweist, in die ein Eingreifelement eingreift, das achsparallel zu dem zylindrischen zweiten Abschnitt von dem ersten Abschnitt in Richtung des zweiten Abschnitts absteht, wobei das Eingreifelement eine Federzunge aufweist, die entgegen der Richtung des Abstehens des Eingreifelements von dem ersten Abschnitt ausgerichtet ist und die in einer zu dem zweiten Abschnitt entgegengesetzten Richtung abgebogen ist und dadurch auf eine Innenwand der achsparallelen Öffnung drückt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine Querschnittsdarstellung eines Rotors mit aufgesetzten Permanentmagneten;
- Figur 2: einen Querschnitt durch eine elektrische Maschine in axialer Richtung;
- Figur 3: eine perspektivische Darstellung eines Rotors an einer Rotorwelle für die elektrische Maschine der Figur 2;
- Figuren 4a und 4b: eine perspektivische Darstellung und eine Querschnittsdarstellung durch eine Ausführungsform eines Rotors mit einem Halteelement mit nach außen gebogenen Federzungen;
- Figuren 5a und 5b: eine perspektivische Darstellung und eine Querschnittsdarstellung einer weiteren Ausführungsform eines Rotors mit in einer Ausnehmung des Rotorkörpers vorgesehenen Federzunge; und
- Figur 6: eine perspektivische Darstellung einer weiteren Ausführungsform eines Rotors mit einem geschlitzten Halteelement.

### Beschreibung von Ausführungsformen

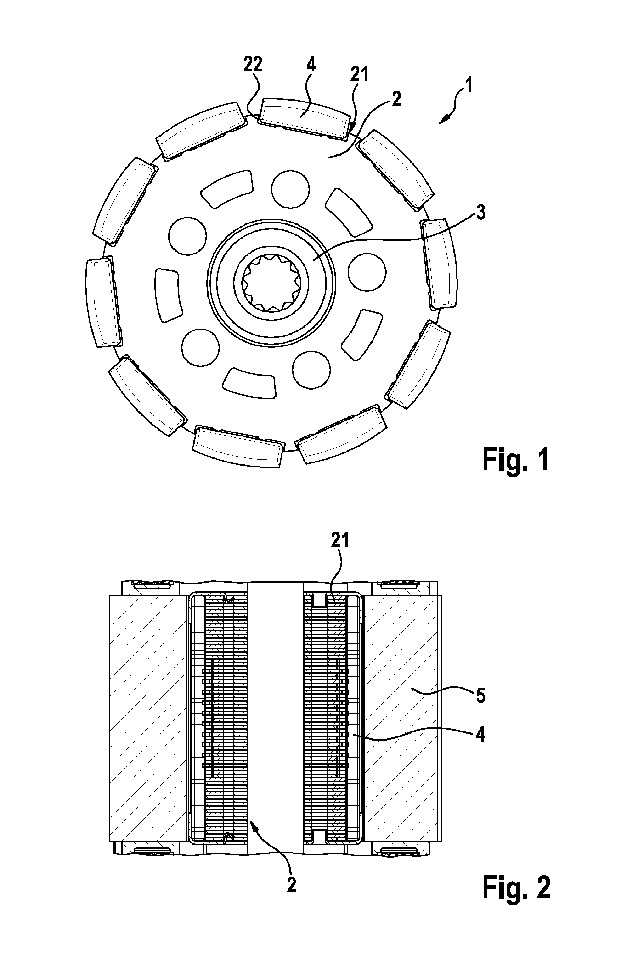

Figur 1 zeigt eine Querschnittsdarstellung durch einen Rotor 1, der einen Rotorkörper 2 aufweist. Der Rotorkörper 2 ist zylindrisch ausgebildet, so dass der Rotor 1 einen Innenläufer für eine elektrische Maschine darstellt. Der Rotorkörper 2 ist ferner an einer Rotorwelle 3 angeordnet, so dass sich der Rotorkörper 2 um eine durch die Rotorwelle 3 definierte Drehachse drehen kann.

Der Rotorkörper 2 kann als Lamellenpaket durch Stapeln gleichartiger Blechlamellen 21 aufgebaut sein. Dadurch wird ein Rotorkörper 2 mit einer zentralen Innenausnehmung 23 gebildet, in die die Rotorwelle 3 eingesetzt wird. An der Mantelfläche 24 des Rotorkörpers 2 sind Ausnehmungen 22 vorgesehen, die sich im Wesentlichen in achsparalleler Richtung und in Umfangsrichtung erstrecken. Die Ausnehmungen 22 stellen radiale Vertiefungen auf der Mantelfläche des Rotorkörpers 2 dar, in denen entsprechend geformte Permanentmagnete 4 angeordnet werden. Die Permanentmagnete 4 sind so geformt, dass sie sich in die Ausnehmungen 22 einsetzen lassen und im Wesentlichen mit den axialen Enden des Rotorkörpers 2 abschließen.

In Figur 2 ist eine Querschnittsdarstellung eines Ausschnitts aus einer elektrischen Maschine mit einem Stator 5 dargestellt. Der Stator 5 umgibt eine Innenausnehmung. In der Innenausnehmung des Stators 5 ist der Rotor 1 drehbar angeordnet. Der Stator 5 ist mit Statorspulen (nicht gezeigt) versehen, die ein wechselndes Magnetfeld in der Innenausnehmung generieren können, so dass ein Antriebsmoment auf den Rotor 1 wirken kann.

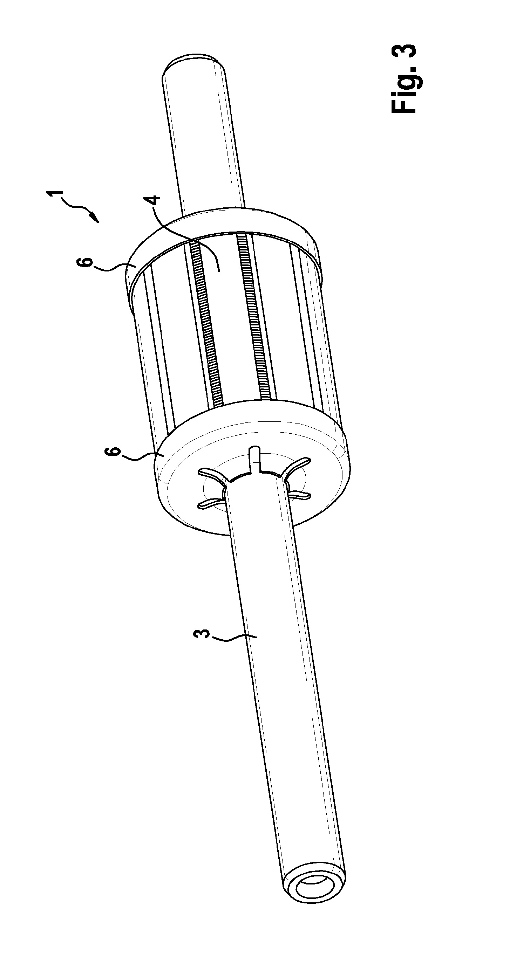

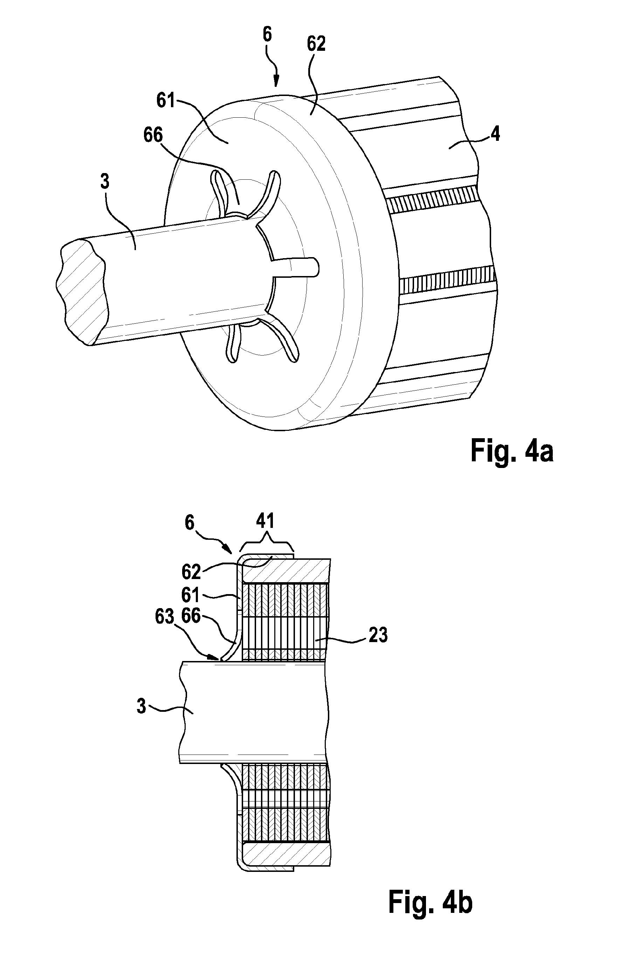

Um die Permanentmagnete 4 an der Mantelfläche 24 des Rotorkörpers 2 zu fixieren, ist mindestens ein Halteelement 6 vorgesehen. Wie in Figur 3 und den Figuren 4a und 4b, die eine Ausführungsform zeigen, dargestellt ist, können an beiden Enden des Rotorkörpers je ein Halteelement 6 vorgesehen sein.

Das Halteelement 6 weist eine Zylinderform mit einem ersten radial verlaufenden Abschnitt 61 mit einer kreisförmigen Kontur und einem zweiten zylindrisch geformten Abschnitt 62 auf, der sich an den äußeren Umfang des ersten Abschnitts 61 anschließt und sich in axialer Richtung erstreckt. Dadurch kann das Halteelement 6 im Wesentlichen koaxial an einem Ende des Rotorkörpers 2 fixiert werden.

Der zweite Abschnitt 62 des Halteelements 6 erstreckt sich im montierten Zustand in Richtung des Rotorkörpers 2 und übergreift die auf der Mantelfläche 24 des Rotorkörpers 2 in den Ausnehmungen 22 angebrachten Permanentmagnete 4 an deren Randbereichen 41 nahe den axialen Enden des Rotorkörpers 2. Das Halteelement 6 ist vorzugsweise aus einem elastischen Blech oder einem sonstigen federelastischen Material ausgebildet, so dass der zweite Abschnitt 62 des Halteelements 6 die Permanentmagnete 4 federelastisch in die Ausnehmungen 22 des Rotorkörpers 2 drückt. Dazu sollte der Innendurchmesser des zweiten Abschnitts 62 des Halteelements 6 gleich oder etwas geringer sein als der Außendurchmesser der durch die dem Rotorkörper gegenüberliegenden Oberflächen der Permanentmagnete 4 gebildeten Außenumfangsfläche.

In der in den perspektivischen Darstellungen der Figuren 3 und 4a sowie in der Querschnittsdarstellung der Figur 4b gezeigten Ausführungsform des Halteelements 6 weist dieses eine Durchlassöffnung 63 zum Durchgang der Rotorwelle 3 auf, wobei die Durchlassöffnung 3 mit Federzungen 66 als Fixierelemente ausgebildet ist. Die Federzungen 66 sind zumindest im auf die Rotorwelle 3 aufgesetzten Zustand nach außen gebogen, d. h. sie stehen in einer zum zweiten Abschnitt 62 des Halteelements 6 entgegengesetzten Richtung ab.

Die Durchlassöffnung 63 für die Rotorwelle 3 weist einen etwas geringeren Durchmesser auf als die Rotorwelle 3, so dass beim Aufschieben des Halteelements 6 auf die Rotorwelle 3 in Richtung des Rotorkörpers 2 die Federzungen 66 an der Oberfläche der Rotorwelle 3 entlang gleiten bzw. entlang schaben und dadurch in einer zur betreffenden Stirnseite des Rotorkörpers 2 entgegengesetzten Richtung gebogen werden. Das Aufschieben erfolgt so lange, bis der erste Abschnitt 61 des Halteelements 6 an der betreffenden Stirnseite des Rotorkörpers 2 anliegt und der zweite Abschnitt 62 federelastisch über dem Randbereich 41 der dem Rotorkörper 2 gegenüberliegenden Oberfläche der Permanentmagneten 4 anliegt und diese auf die Umfangsfläche des Rotorkörpers 2 drückt. In dieser Position des Halteelements 6 drücken die Federzungen 66 auf die Oberfläche der Rotorwelle 3, so dass das Halteelement 6 daran gehindert wird, sich von dem Rotorkörper 2 zu lösen, da die Federzungen 66 sich ansonsten in das Material der Rotorwelle 3 einschneiden.

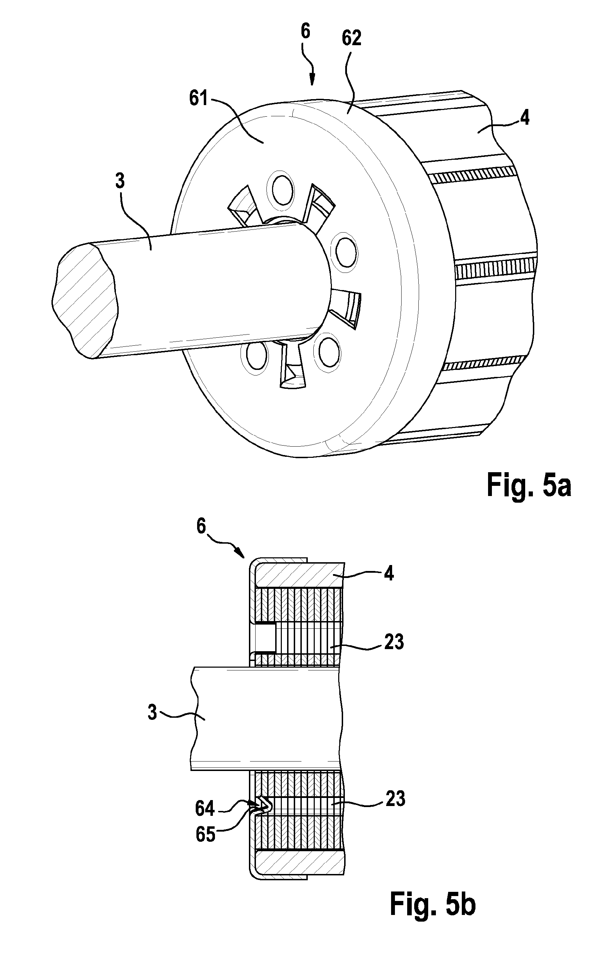

In den Figuren 5a und 5b sind jeweils eine perspektivische Darstellung und eine Querschnittsdarstellung einer weiteren Ausführungsform des Halteelements 6 und dessen Anbringung an einem Rotorkörper 2 dargestellt. Das Halteelement 6 der Ausführungsform der Figuren 5a und 5b umfasst den ersten Abschnitt 61 und den zweiten Abschnitt 62, die entsprechend der in den Figuren 4a und 4b gezeigten Anordnung ausgebildet sind.

Im Gegensatz zu der Ausführungsform der Figuren 4a und 4b weist das Halteelement 6 der Figuren 5a und 5b keine radial nach innen gerichteten Federzungen 66 auf. Stattdessen sind an dem ersten Abschnitt 61 ein oder mehrere Eingreifelemente 64 vorgesehen, die in axial verlaufende Ausnehmungen 23 im Inneren des Rotorkörpers 2 eingreifen. Die Eingreifelemente 64 weisen Federzungen 65 als Fixierelemente auf, die von den Eingreifelementen 64 in einer radialen Richtung schräg in Richtung des axialen Endes des Rotorkörpers 2 abstehen, an dem das Halteelement 6 anliegt, und mit einer Federkraft an eine Innenwand der Innenausnehmung 23 gedrückt werden. Die Federzunge 65 verhindert dann ein einfaches Abziehen oder ein sich Lösen des Halteelements 6 von dem Rotorkörper 2, da die Federzunge 65, wie in dem zuvor beschriebenen Ausführungsbeispiel, in eine Oberfläche des Rotorkörpers 2 einschneidet und insbesondere an einer Stufung zwischen zwei aufeinander liegenden Blechlamellen 21 des Rotorkörpers 2 gehalten werden kann oder sich selbst verhakt.

Die Anzahl und Anordnung der Eingreifelemente 64 ist vorzugsweise so gewählt, dass eine Unwucht des Rotors 1 aufgrund des Vorsehens des Halteelements 6 und auch ein Verkippen des Halteelements 6 gegenüber der Achse der Rotorwelle 3 vermieden werden kann.

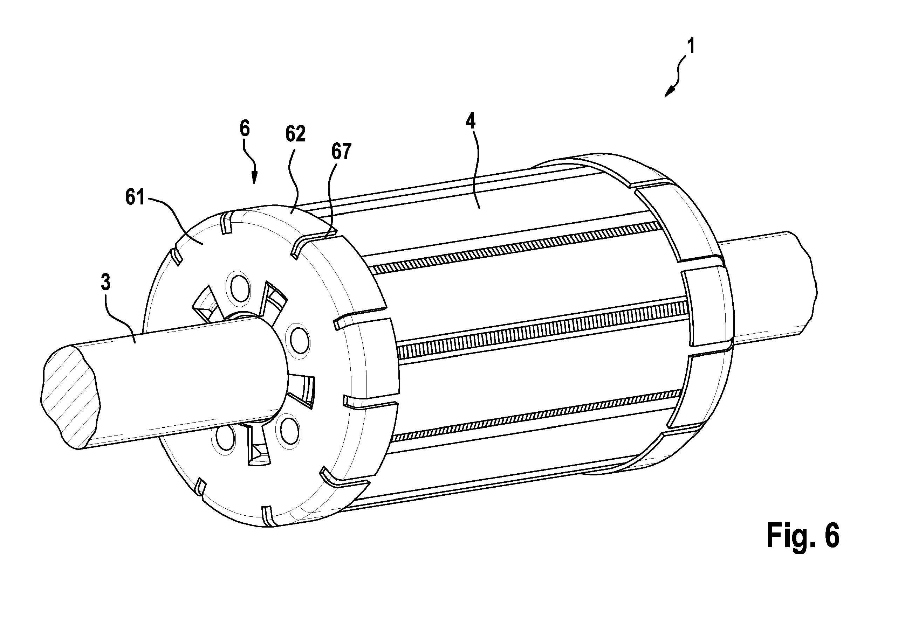

In Figur 6 ist eine weitere Ausführungsform des Halteelements 6 dargestellt, bei der der zweite Abschnitt 62 in axialer Richtung geschlitzt ausgebildet ist. Durch die Schlitze 67 können Bauteiltoleranzen der einzelnen Permanentmagnete 4 besser ausgeglichen werden. Insbesondere bei leicht voneinander abweichenden Höhen der Permanentmagnete 4, die ihre Erstreckung in radialer Richtung definieren, kann durch die geschlitzte Ausführung des zweiten Abschnitts 62 des Halteelements 6 zuverlässig gewährleistet werden, dass jeder der Permanentmagnete 4 mit einer Anpresskraft auf den Rotorkörper 2 gedrückt wird. Vorzugsweise entspricht die Anzahl der Schlitze 67 mindestens der Anzahl der Permanentmagnete 4 an dem Rotorkörper 2. Die Schlitzung des zweiten Abschnitts 62 ermöglicht auch einen größeren Federbereich von dadurch in dem zweiten Abschnitt gebildeten Federblechen.

Ein Rotor 1 kann unter Verwendung eines an einer Stirnseite des Rotorkörpers 2 angeordneten Halteelements 6 aufgebaut sein, wenn das dem Halteelement 6 gegenüberliegende Ende des Rotorkörpers 2 Einrichtungen vorsieht, um die Permanentmagnete 4 auf sonstige Weise zu halten, wie beispielsweise einen Unterschnitt, in den ein entsprechender Abschnitt der Permanentmagnete 4 eingeschoben wird, oder dergleichen. Alternativ kann auch vorgesehen sein, an beiden Enden des Rotors 1 in axialer Richtung identische Halteelemente 6 vorzusehen, wie dies beispielsweise in den Figuren 3 und 6 dargestellt ist. Das Halteelement 6 ist vorzugsweise einteilig als Biege-Stanzteil ausgeführt.

Es sei angemerkt, dass hinsichtlich der in den Figuren und in der Beschreibung gezeigten Ausführungsbeispiele vielfältige Kombinationsmöglichkeiten untereinander möglich sind. So kann das Halteelement 6 federelastische Fixierelemente 65, 66 aufweisen, die sich sowohl an der Rotorwelle als auch in axialen Öffnungen im Rotorköper 2 axial abstützen. Dabei erstrecken sich die Fixierelemente 65, 66 ausgehend vom ersten radialen Abschnitt 61 in axialer Richtung zum Rotorkörper 2 hin als auch vom Rotorkörper 2 weg. Durch die topfförmige Ausbildung des ersten Abschnitts 61 mit dem zweiten zylinderförmigen Abschnitt 62 werden die Permanentmagnete 4 radial von außen nach innen gegen den Rotorkörper 2 gepresst und gleichzeitig auch axial zuverlässig auf dem Rotorkörper gehalten.

## Patentansprüche

1. Halteelement (6) zum Fixieren von Permanentmagneten (4) an einem Rotor (1) einer elektrischen Maschine, umfassend:
- einen ersten Abschnitt (61), der im Wesentlichen eine Kreiskontur aufweist;
- einen sich an eine Umfangslinie der Kreiskontur des Halteelements (6) anschließenden zylindrischen zweiten Abschnitt (62), der sich quer zur durch die Kreiskontur aufgespannten Fläche in einer axialen Richtung erstreckt;
- mindestens ein federelastisches Fixierelement (65, 66), das ausgebildet ist, um beim Aufschieben des Halteelements (6) auf einen Rotorkörper (2) das Halteelement (6) auf dem Rotor (1) zu fixieren.

2. Halteelement (6) nach Anspruch 1, wobei das Fixierelement (66) eine oder mehrere Federzungen aufweist.

3. Halteelement (6) nach Anspruch 2, wobei die Federzungen (66) radial nach innen zu einer Durchlassöffnung (63) des Halteelements (6) ausgerichtet sind.

4. Halteelement (6) nach einem der Ansprüche 1 bis 3, wobei mindestens ein Eingreifelement (64) vorgesehen ist, das axial von dem ersten Abschnitt (61) in Richtung des zweiten Abschnitts (62) absteht, wobei das mindestens eine Eingreifelement (64) eine Federzunge (65) aufweist, die entgegen der Richtung des Abstehens des Eingreifelements (64) von dem ersten Abschnitt (61) ausgerichtet ist.

5. Halteelement (6) nach einem der Ansprüche 1 bis 4, wobei der zweite Abschnitt (62) in axialer Richtung einen oder mehrere Schlitze (67) aufweist.

6. Rotor (1) für eine elektrische Maschine, umfassend:
- einen Rotorkörper (2);
- mindestens einen Permanentmagneten (4), der auf einer- insbesondere zylindrischen - Oberfläche (24) des Rotorkörpers (2) angeordnet ist;
- ein Halteelement (6) - vorzugsweise nach einem der vorhergehenden Ansprüchen - mit einem ersten Abschnitt (61), der im Wesentlichen eine Kreiskontur aufweist, und mit einem sich an eine Umfangslinie der Kreiskontur des Halteelements (6) anschließenden zylindrischen zweiten Abschnitt (62), der sich quer zur durch die Kreiskontur aufgespannten Fläche in einer axialen Richtung erstreckt;
wobei der zweite Abschnitt (62) an einer dem Rotorkörper (2) gegenüberliegenden Oberfläche des mindestens einen Permanentmagneten (4) federelastisch anliegt, um den mindestens einen Permanentmagneten (4) an den Rotorkörper (2) zu drücken.

7. Rotor (1) nach Anspruch 6, wobei der Rotorkörper (2) an seiner Mantelfläche (24) mindestens eine Ausnehmung (22) aufweist, um den mindestens einen Permanentmagneten (4) aufzunehmen.

8. Rotor (1) nach Anspruch 6 oder 7, wobei das Halteelement (6) ein Fixierelement (65, 66) umfasst, um das Halteelement (6) in axialer Richtung an dem Rotorkörper (2) zu halten.

9. Rotor (1) nach Anspruch 6 bis 8, wobei der Rotor (1) eine Rotorwelle (3) aufweist, die koaxial zu dem Rotorkörper (2) angeordnet ist, wobei das Fixierelement (66) mindestens eine Federzunge (66) umfasst, die radial nach innen zu einer Durchlassöffnung (63) ausgerichtet ist, wobei das Halteelement (6) auf die Rotorwelle (3) aufgeschoben ist, so dass es an einer Stirnseite des Rotorkörpers (2) anliegt, und wobei die mindestens eine Federzunge (66) durch Anliegen an der Rotorwelle (3) in einer zu dem zweiten Abschnitt (62) entgegengesetzten Richtung abgebogen ist und sich an der Rotorwelle (3) axial abstützt.

10. Rotor (1) nach Anspruch 6 bis 9, wobei der Rotor (1) eine Rotorwelle (3) aufweist, die koaxial zu dem Rotorkörper (2) angeordnet ist, wobei der Rotorkörper (2) mindestens eine axiale Öffnung (23) aufweist, in die ein Eingreifelement (65) eingreift, das axial entlang dem zylindrischen zweiten Abschnitt (62) von dem ersten Abschnitt (61) in Richtung des zweiten Abschnitts (62) absteht, wobei das Eingreifelement (65) eine Federzunge aufweist, die entgegen der Richtung des Abstehens des Eingreifelements (65) von dem ersten Abschnitt (61) ausgerichtet ist und die in einer zu dem zweiten Abschnitt (62) entgegengesetzten Richtung abgebogen ist und dadurch auf eine Innenwand der axialen Öffnung (23) drückt.

11. Elektrische Maschine - insbesondere ein Elektromotor - mit einem Rotor (1) nach einem der Ansprüche 6 bis 10.
